# EUROPEAN PATENT SPECIFICATION

(11) **EP 3 175 758 B1**
(45) Date of publication and mention of the grant of the patent: **01.05.2019**
(21) Application number: 15828051.1
(22) Date of filing: 25.03.2015
(51) Int. Cl.: A47L 9/20, A47L 9/16

(54) **CLEANER**
REINIGER
DISPOSITIF DE NETTOYAGE

(30) Priority: 31.07.2014 KR 20140098116
(43) Date of publication of application: 07.06.2017
(73) Proprietor: Samsung Electronics Co., Ltd., Suwon-si, Gyeonggi-do 16677 (KR)
(72) Inventor: CHO, Dong Jin, Suwon-si Gyeonggi-do 442-702 (KR)
(74) Representative: Walaski, Jan Filip
(86) International application number: PCT/KR2015/002921
(87) International publication number: WO 2016/017893

(56) References cited:
- EP-A2- 1 721 556
- EP-A2- 2 489 293
- JP-A- H08 131 897
- JP-U- S 567 555
- JP-U- S5 378 679
- JP-U- S5 867 550
- JP-U- S6 351 660
- JP-U- S57 195 460
- KR-A- 20090 016 498
- KR-A- 20090 130 244
- KR-B1- 100 612 204
- KR-B1- 101 143 807
- US-A1- 2005 183 233

## Description

### [Technical Field]

Embodiments of the present disclosure relate to a cleaner, and more particularly to a cleaner including a cyclone dust collector.

### [Background Art]

Generally, a cleaner is a device that suctions dust and foreign substances scattered on a surface to be cleaned together with air using suction force, filters the dust and foreign substances from the suctioned air, and discharges purified air to the outside.

Cleaners having the above function may be classified into a canister-type cleaner in which a main body and a suction nozzle are separated from each other and communicate with each other through a predetermined pipe, and an upright-type cleaner in which a suction nozzle and a main body are integrated.

The cleaner includes a driver to generate suction force, a suction part to suction air on a surface to be cleaned using suction force of the driver, and a dust collector to filter dust from the air suctioned through the suction part and discharge purified air to the outside.

A cyclone dust collector from among a plurality of dust collectors, which is a dust collector that separates dust from the suctioned air using centrifugal force, is widely used since it is semipermanently usable and more hygienic and convenient than other dust collectors that employ a dust bag.

The cyclone dust collector is applicable to any type of cleaners including a canister-type cleaner, an upright-type cleaner, and a hand-type cleaner, irrespective of the shape or category of the cleaners.

The cyclone dust collector may include at least one cyclone. At least one cyclone may separate dust from the air introduced into the cyclone dust collector using centrifugal force. When dust is separated from the suctioned air introduced into the cyclone dust collector, the separated dust may be accumulated at an inner wall of at least one cyclone. The dust accumulated on the inner wall of the at least one cyclone may disturb flow of air introduced into the at least one cyclone, resulting in reduction of dust filtering efficiency of the cyclone dust collector. That is, the dust accumulated on the inner wall of at least one cyclone may result in dust clogging of the at least one cyclone, such that the cyclone dust collector may have difficulty in efficiently performing dust filtering. In addition, at least one cyclone has a complicated internal structure to be cleaned, such that a user of the at least one cyclone has difficulty in removing the dust accumulated on the inner wall of the at least one cyclone.

EP 1721556 discloses a multi cyclone apparatus for a vacuum cleaner.

An object of the present disclosure is to provide a cleaner having an improved structure to efficiently remove dust from suctioned air.

Another object of the present disclosure is to provide a cleaner having an improved structure to prevent a cyclone dust collector from being clogged with dust or dirt.

A still another object of the present disclosure is to provide a cleaner having an improved structure to perform self-cleaning of a cyclone dust collector.

According to an aspect of the invention, there is provided a cleaner according to claim 1.

The cleaning member may rotate while contacting at least a portion of the inner wall of the at least one dust separator.

The at least one dust separator includes a dust outlet through which dust separated from the air is discharged; and the cleaning member may rotate while contacting the dust outlet.

The at least one dust separator includes a dust outlet through which dust separated from the air is discharged; and the cleaning member may be elongated in a longitudinal direction of the at least one dust separator in a manner that one end of the cleaning member faces the dust outlet.

The one end of the cleaning member may pass through the dust outlet, and may protrude toward a dust container.

The cleaning member may include a cross section including at least one of a conic section and a polygonal section.

The cleaner member may be coupled to a mass to increase contact strength of the cleaning member with respect to the inner wall of the at least one dust separator.

An auxiliary cleaning member may be coupled to the cleaning member. The auxiliary cleaning member may contact the inner wall of the at least one dust separator, and may rotate along with the cleaning member to clean the inner wall of the at least one dust separator.

The auxiliary cleaning member may include a brush.

The cleaning member may be formed of a deformable material such that the cleaning member contacts the inner wall of the at least one dust separator according to rotation movement thereof.

The cleaning member may include at least one of metal, plastic, silicon, glass fiber, and rubber.

The cleaning member may be provided in the at least one dust separator in a manner that one end thereof is fixed.

The dust collector may further include a cover coupled to the at least one dust separator in a manner that air introduced through the inlet is guided to the at least one dust separator; and the cleaning member may be coupled to the cover in a manner that the cleaning member rotates in the at least one dust separator.

The at least one dust separator includes an air inlet through which the air introduced through the inlet flows into the at least one dust separator; the cover includes at least one protrusion having a protrusion shape to be inserted into the air inlet; and the cleaning member may be coupled to the at least one protrusion in a manner that the cleaning member rotates in the at least one dust separator.

The dust collector may further include a cover coupled to the at least one dust separator in a manner that air introduced through the inlet is guided to the at least one dust separator; each cleaning member provided in the at least one dust separator may be coupled to a fastening member disposed in the cover; and the fastening member and the cleaning member may be integrated with each other.

In another aspect of the present disclosure, a cleaner including a dust collector configured to separate dust from air through centrifugation includes: the dust collector includes at least one cyclone arranged to separate dust from the air through a swirling airflow, wherein at least one cleaning member to clean an inner wall of the at least one cyclone is provided in the at least one cyclone.

The at least one cleaning member may be provided to rotate.

The at least one cleaning member may be provided to rotate while contacting at least a portion of the inner wall of the at least one cyclone.

The at least one cleaning member may be provided to rotate under a condition that one end thereof is fixed.

The dust collector may further include a dust container arranged to collect dust separated from the air and to communicate with the at least one cyclone. The at least one cyclone includes: an air inlet through which air having passed through the inlet is introduced; and a dust outlet arranged along with the air inlet in a longitudinal direction of the at least one cyclone in a manner that the dust separated from the air introduced through the air inlet is discharged. One end of the cleaning member directed to the dust outlet may protrude from the dust outlet toward the dust container.

The at least one cyclone includes a dust outlet through which the dust separated from the air introduced through the inlet is discharged. The cleaning member may be coupled to a fixing member provided in the at least one cyclone in a manner that the cleaning member includes an opening hole, and is elongated from the fixing member toward the dust outlet in a longitudinal direction of the at least one cyclone.

The cleaner may further include: a cover coupled to the at least one cyclone in a manner that air introduced through the inlet is guided to the at least one cyclone, wherein the cover includes at least one protrusion having an exhaust outlet through which air from which the dust is separated is exhausted such that the exhaust outlet communicates with the at least one cyclone, and the cleaning member is provided to rotate under a condition that one end thereof is fixed to the at least one protrusion.

In another aspect of the present disclosure, a cleaner including a dust collector configured to separate dust from air through centrifugation includes the dust collector. The dust collector includes: a dust collection case having an inlet through which air is introduced and an outlet through which the air is discharged; and at least one cyclone provided in the dust collection case to separate dust from the air introduced through the inlet, wherein a cleaning member is provided in the at least one cyclone such that the cleaning member rotates by a swirling airflow generated by an operation of the cleaner and cleans an inner wall of the at least one cyclone.

The cleaning member may be provided in the at least one cyclone such that the cleaning member rotates while contacting at least a portion of the inner wall of the at least one cyclone.

The cleaning member may be elongated in a longitudinal direction of the at least one cyclone.

The at least one cyclone may have a symmetrical shape on the basis of a symmetric axis parallel to a longitudinal direction of the at least one cyclone; and the cleaning member may be provided in the at least one cyclone in a manner that the cleaning member is located over the symmetric axis.

The at least one cyclone may have a symmetrical shape on the basis of a symmetric axis parallel to a longitudinal direction of the at least one cyclone; and the cleaning member may be provided in the at least one cyclone in a manner that the cleaning member is disposed between the symmetric axis and the inner wall of the at least one cyclone.

The dust collector may further include a cover having at least one protrusion to be inserted into the air inlet; and one end of the cleaning member directed to the air inlet may be fixed to the at least one protrusion.

The at least one protrusion may include an exhaust outlet through which air from which the dust is separated is exhausted in a manner that the exhaust outlet communicates with the at least one cyclone; and the one end of the cleaning member directed to the air inlet may be fixed to a bridge crossing the exhaust outlet.

The dust collector may further include a cover having at least one protrusion to be inserted into the air inlet; and the cleaning member detachably coupled to the at least one protrusion may be integrated with a coupling member.

The at least one protrusion may include an exhaust outlet through which air from which the dust is separated is exhausted in a manner that the exhaust outlet communicates with the at least one cyclone; and the coupling member may have a hollow portion corresponding to the exhaust outlet, and is coupled along a circumference of the exhaust outlet.

The dust collector may further include a cover having at least one protrusion which is formed to be inserted into the air inlet and includes an exhaust outlet through which air from which the dust is separated is exhausted in a manner that the exhaust outlet communicates with the at least one cyclone; and each cleaning member provided in the at least one cyclone may be integrated with a fastening member detachably coupled to the cover.

Each cleaning member provided in the at least one cyclone may be coupled to the fastening member after passing through the exhaust outlet.

### [Advantageous Effects]

As is apparent from the above description, the cleaner according to the embodiments of the present disclosure includes a cleaning member in at least one cyclone, resulting in expectation of a self-cleaning effect of at least one cyclone.

The cleaner according to the embodiments includes a cleaning member in at least one cyclone to directly contact an inner wall of the at least one cyclone, such that dust accumulated on the inner wall of the at least one cyclone can be effectively removed.

The cleaner according to the embodiments includes a cleaning member integrated with a detachable coupling structure as one body, such that repairing and replacement of the cleaning member are facilitated.

### [Description of Drawings]

The accompanying drawings, which are included to provide a further understanding of the invention, illustrate embodiments of the invention and together with the description serve to explain the principle of the invention.
FIG. 1 is a view illustrating a cleaner according to an embodiment of the present disclosure.
FIG. 2 is a view illustrating a cleaner in which a cyclone dust collector is separated from a main body according to an embodiment of the present disclosure.
FIG. 3 is an exploded perspective view illustrating the cyclone dust collector of the cleaner according to an embodiment of the present disclosure.
FIG. 4 is a cross-sectional view illustrating the cyclone dust collector of the cleaner according to an embodiment of the present disclosure.
FIG. 5 is a perspective view illustrating a grille unit of the cleaner according to an embodiment of the present disclosure.
FIG. 6 is a perspective view illustrating a cyclone body of the cleaner according to an embodiment of the present disclosure.
FIG. 7A is a partially-cut perspective view illustrating a coupling structure between the grille unit and the cyclone body of the cleaner according to an embodiment of the present disclosure.
FIG. 7B is a cross-sectional view illustrating the cleaner taken along the line A-A' of FIG. 4.
FIGS. 8A to 8H are cross-sectional views various shapes of a cleaning member disposed in at least one cyclone according to a first embodiment of the cleaner of the present disclosure.
FIG. 9 illustrates various cross-sectional shapes of the cleaning member disposed in at least one cyclone according to a first embodiment of the cleaner of the present disclosure.
FIGS. 10A to 10F illustrate various coupling structures of a coupling member disposed in at least one cyclone according to a first embodiment of the cleaner of the present disclosure.
FIG. 11 is a cross-sectional view illustrating at least one cyclone according to a second embodiment of the cleaner of the present disclosure.
FIG. 12 is a cross-sectional view illustrating at least one cyclone according to a third embodiment of the cleaner of the present disclosure.
FIG. 13 is a perspective view illustrating a cyclone body of a cleaner according to another embodiment of the present disclosure.
FIG. 14 is an enlarged cross-sectional view illustrating a portion of a cyclone body of a cleaner according to an arrangement which is not an embodiment of the present disclosure.
FIGS. 15 and 16 illustrate flow of air within a cyclone dust collector of the cleaner according to an embodiment of the present disclosure.

### [Mode for Invention]

Reference will now be made in detail to the embodiments of the present disclosure, examples of which are illustrated in the accompanying drawings, wherein like reference numerals refer to like elements throughout. The cleaner according to the embodiments will hereinafter be described with reference to the attached drawings. Terms "front end", "rear end", "upper part," "lower part," "upper end," and "lower end" are defined based on the drawings and do not limit shapes and positions of components.

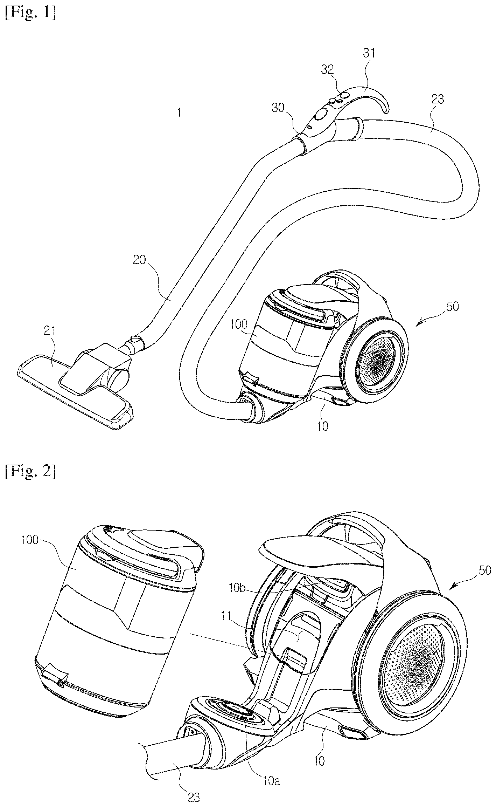

FIG. 1 is a view illustrating a cleaner according to an embodiment of the present disclosure. FIG. 2 is a view illustrating a cleaner in which a cyclone dust collector is separated from a main body according to an embodiment of the present disclosure. The term "dust collector" 100 may conceptually include a cyclone dust collector. The term "dirt" may include dust and other foreign substances.

Referring to FIGS. 1 and 2, a cleaner 1 may include a main body 10, a dust collector 100, a suction part 21, and a wheel assembly 50. The dust collector 100 and the wheel assembly 50 may be mounted to the main body 10. Specifically, the dust collector 100 may be detachably mounted to the main body 10. The suction part 21 may contact a surface to be cleaned, and thus suction foreign materials from the surface to be cleaned.

The main body 10 may include a fan motor (not shown) configured to generate suction force. The suction part 21 may suction air from a surface to be cleaned and suction dust from the suctioned air through the suction force generated by the main body 10. The suction part 21 may be formed to be wide and flat to closely contact the surface to be cleaned.

An extension pipe 20, a handle pipe 30, and a flexible hose 23 may be disposed between the main body 10 and the suction part 21. The extension pipe 20 may be formed of resin or metal, and may interconnect the suction part 21 and the handle pipe 30.

The handle pipe 30 may interconnect the extension pipe 20 and the flexible hose 23. The handle pipe 30 may include a handle part 31 and a manipulation part 32. The user may grasp the handle part 31 to perform cleaning. In addition, the user may turn the cleaner 1 on or off by manipulating a button or the like mounted to the manipulation part 32, or manipulate functions of the cleaner 1 such as adjustment of suction intensity.

The flexible hose 23 connects the handle pipe 30 to the main body 10. The flexible hose 23 may be formed of a flexible material to ensure free movement of the handle pipe 30.

The suction part 21, the extension pipe 20, the handle pipe 30 and the flexible hose 23 may communicate with each other. The air drawn into the suction part 21 may sequentially pass through the extension pipe 20, the handle pipe 30 and the flexible hose 23 and flow into the main body 10.

The main body 10 may be provided with a first body port 10a guiding the suctioned air to the dust collector 100 and a second body port 10b allowing the air purified in the dust collector 100 to be discharged therethrough. The second body port 10b may communicate with a suction chamber (not shown) provided with a fan motor (not shown).

The main body 10 may be provided with a mounting part 11 to which the dust collector 100 is mountable. The dust collector 100 may be detachably mounted to the mounting part 11. The dust collector 100 separates dust from the air suctioned through the suction part 21 and collects the separated dust such that purified air is directed to the fan motor (not shown) through the second body port 10b.

The dust collector 100 may generate rotating airflow to separate dust from the air with centrifugal force. That is, the dust collector 100 generates a swirling airflow, and separates dust from the air using centrifugal force. When a certain amount of dust is accumulated in the dust collector 100, the user may detach the dust collector 100 and remove the dust therefrom.

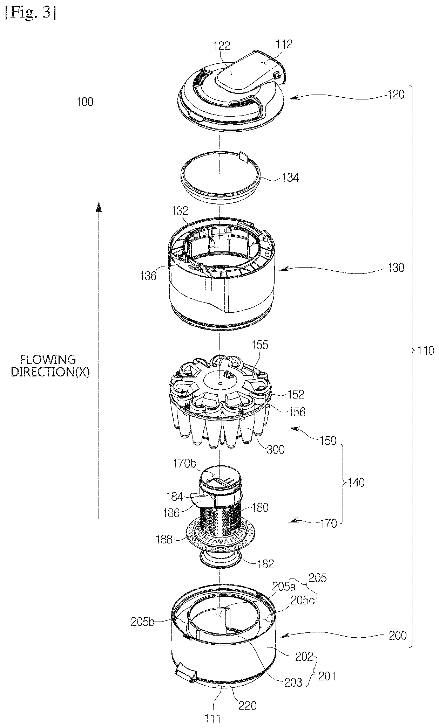

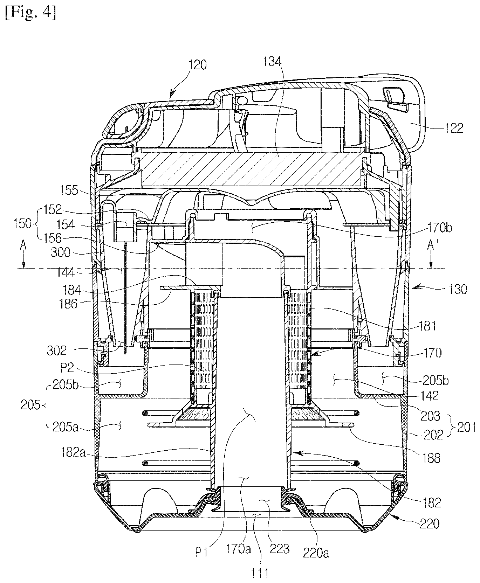

FIG. 3 is an exploded perspective view illustrating the cyclone dust collector of the cleaner according to an embodiment of the present disclosure. FIG. 4 is a cross-sectional view illustrating the cyclone dust collector of the cleaner according to an embodiment of the present disclosure. Other reference numerals (not shown) will refer to FIGS. 1 and 2. At least one cyclone 300 may also be referred to as at least one dust separator or a corn. The term "upper cyclone body" 152 may also be referred to as a cover. The term "dust collection container" 200 may also be referred to as a dust reception part.

Referring to FIGS. 3 and 4, the dust collector 100 may include a dust collection case 110 and a cyclone assembly 140.

The dust collection case 110 is coupled to the main body 10 to collect dirt such as dust in the air. The dust collection case 110 coupled to the main body 10 may filter out dirt from the suctioned air and discharge purified air.

The dust collection case 110 is provided with a suction port 220a and a discharge port 122. When the air suctioned through the suction part 21 flows into the dust collection case 110 through the suction port 220a, dust is removed from the air in the dust collection case 110 and then the air is discharged from the main body 10 through the discharge port 122. The air discharged from the dust collection case 110 through the discharge port 122 may flow into the suction chamber (not shown) through the second body port 10b.

The dust collection case 110 may include an inlet 111 through which air containing dust is introduced and an outlet 112 through which purified air is discharged. In more detail, the dust collection case 110 may include an inlet through which polluted air containing dust is introduced and an outlet 112 through which dust-free purified air is discharged. The inlet 111 may be mounted to the suction port 220a, and the outlet 112 may be mounted to the discharge port 122.

The dust collection case 110 may form the external appearance of the dust collector 100. A portion of the dust collection case 110 may be formed of a transparent material such the inner space of the dust collection case 110 is visible.

The dust collection case 110 may include an upper case 120, a middle case 130, and a dust collection container 200.

The middle case 130 may be formed in the shape of a cylinder having an open top and open bottom. An upper part of the middle case 130 is provided with a filter member 134 to re-filter out dirt from the air having passed through cyclone chambers 142 and 144. The filter member 134 may be disposed in an upper opening 132 provided to the upper part of the middle case 130. That is, the filter member 134 may be disposed in the upper opening 132 of the middle case 130 so that fine dust remaining in the air having passed through the cyclone chambers 142 and 144 is filtered out through the filter member 134.

The upper case 120 may be arranged at an upper part of the middle case 130. The upper case 120 may be pivotably hinged to a hinge 136 provided to the middle case 130. The upper case 120 may be provided with the discharge port 122 through which the air purified through the cyclone chambers 142 and 144 and the filter member 134 is discharged. The discharge port 122 may communicate with a suction chamber (not shown) in the main body 10 in which a fan motor (not shown) is arranged.

The dust collection container 200 may collect dust separated from the air, and may communicate with at least one cyclone 300. In addition, the dust collection container 200 may be provided below the middle case 130 so as to collect dust contained in the air.

The dust collection container 200 may include a container body 201 and a dust collection chamber 205 provided in the container body 201 to collect dust or dirt therein.

The dust collection chamber 205 may include a first dust collection chamber 205a and a second dust collection chamber 205b. The first dust collection chamber 205a may correspond to the first cyclone dust collection chamber 142, and the second dust collection chamber 205b may correspond to the second cyclone dust collection chamber 144. That is, dust discharged from the first cyclone chamber 142 may be collected in the first dust collection chamber 205a, and dust discharged from the second cyclone chamber 144 may be collected in the second dust collection chamber 205b. The second cyclone chamber 144 may be arranged in a circumferential direction along a circumference of the first cyclone chamber 142, so that the second dust collection chamber 205b may be arranged in a circumferential direction with respect to the first dust collection chamber 205a so as to correspond to the second cyclone chamber 144. That is, the second dust collection chamber 205b may be formed in a ring shape, and at least some parts of the second dust collection chamber 205b may be formed along a circumference of an upper part of the first dust collection chamber 205a.

The second dust collection chamber 205b may include a discharge chamber 205c. The discharge chamber 205c may be formed to collect dust or dirt collected in the second dust collection chamber 205b. The discharge chamber 205c may be provided in a deep-depth section of the second dust collection chamber 205b. One opened end of the discharge chamber 205c may be opened or closed by the discharge cover 220.

The container body 201 may include a container outer wall 202 and a container inner wall 203. The container outer wall 202 is formed in the shape of a cylinder having an open top and open bottom, and the container inner wall 203 is formed in the shape of a flange extending inward to have an annular space at the inner upper part of the container outer wall 202. The first dust collection chamber 205a is enclosed by the inner side of the container outer wall 202, the inner side of the container inner wall 203, and the discharge cover 220. The second dust collection chamber 205b is enclosed by the inner side of the container outer wall 202, the outer side of the container inner wall 203, and the discharge cover 220.

At least one portion of the dust collection container 200 may be formed of a transparent material such that the dust collection chamber 205 is visible from the outside of the dust collection container 200.

The discharge cover 220 may be provided with the suction port 220a. The suction port 220a allows the air introduced through the flexible hose 23 to flow into the dust collector 100. The suction port 220a may communicate with an introduction pipe 173. The suction port 220a is disposed at the discharge cover 220 such that the air suctioned through the suction part 21 flows into a lower portion of the dust collection case 110, not introduced by going around a lateral surface of the dust collection case 110. The inlet 111 may be provided at the suction port 220a.

The cyclone assembly 140 may be provided in the dust collection case 110.

The cyclone part 140 generates swirling airflow such that dirt is separated from the air by centrifugal force. Swirling airflow is generated when the fan motor (not shown) provided in the main body 10 is driven.

Provided in the dust collection case 110 are the cyclone chambers 142 and 144, in which the swirling airflow is created by the suction force generated by the fan motor. The air and dust may be centrifugally separated from each other in the cyclone chambers 142 and 144 to filter out the dust. The cyclone chambers 142 and 144 may include a first cyclone chamber 142 and a second cyclone chamber 144.

The first cyclone chamber 142 may be defined by a grille unit 170, a cyclone body 150, and the dust collection case 110. The second cyclone chamber 144 may be defined by the cyclone body 150 and at least one cyclone 300.

In another aspect of the present disclosure, the arrangement relationship of the dust collector 100 will hereinafter be described in detail. The arrangement relationship of the dust collector 100 will hereinafter be described with reference to the airflow. When the direction in which the air introduced through the inlet 111 moves toward the outlet 112 is defined as a flowing direction X, the upper case 120 may be located downstream of the flowing direction X, and the dust collection container 200 may be located upstream of the flowing direction X. The cyclone assembly 140 may be disposed between the upper case 120 and the dust collection container 200. The filter member 134 may be arranged downstream of the cyclone assembly 140 in the flowing direction X so that remaining dust can be removed from the air having passed through the cyclone assembly 140. In more detail, the filter member 134 may be arranged downstream of the upper cyclone body 152 in the flowing direction X in such a manner that the air having passed through a discharge port 154 can be delivered therethrough.

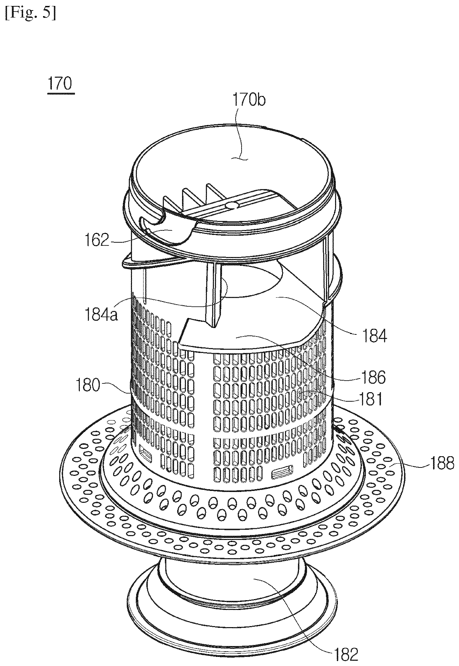

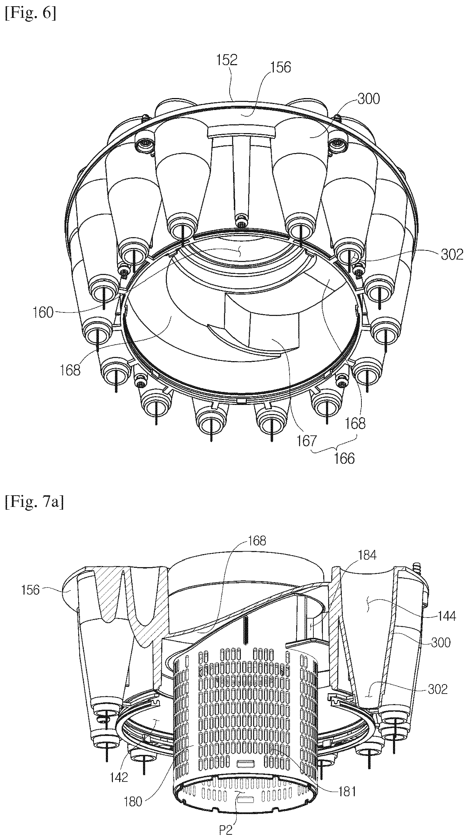

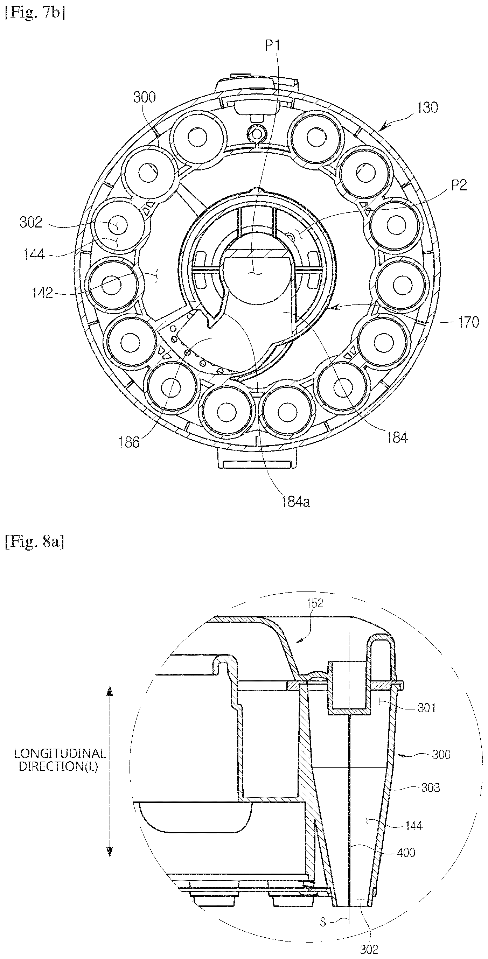

FIG. 5 is a perspective view illustrating a grille unit of the cleaner according to an embodiment of the present disclosure. FIG. 6 is a perspective view illustrating a cyclone body of the cleaner according to an embodiment of the present disclosure. FIG. 7A is a partially-cut perspective view illustrating a coupling structure between the grille unit and the cyclone body of the cleaner according to an embodiment of the present disclosure. FIG. 7B is a cross-sectional view illustrating the cleaner taken along the line A-A' of FIG. 4. Other reference numerals (not shown) will refer to FIGS. 1 to 4. The cleaning member 400 is omitted from FIG. 7B.

Te cyclone assembly 140 may include a grille unit 170 and a cyclone body 150.

The cyclone body 150 may be arranged in the dust collection case 110. In addition, the cyclone body 150 may be provided with the grille unit 170 seated therein. The cyclone body 150 may guide the air discharged from the first cyclone chamber 142 such that the air moves to the second cyclone chamber 144 via the grille unit 170.

The cyclone body 150 includes an upper cyclone body 152 and a lower cyclone body 156. The grille unit 170 and at least one cyclone 300 having the second cyclone chamber 144 may be seated in the lower cyclone body 156. A guide pipe 155 is formed in the upper cyclone body 152 to guide the air discharged from the first cyclone chamber 142 such that the air having passed through a dust separation housing 171 from the first cyclone chamber 142 flows into the second cyclone chamber 144. In addition, the upper cyclone body 152 may be coupled to at least one cyclone 300 in such a manner that air introduced through the inlet 111 is directed to at least one cyclone 300. A detailed description of the upper cyclone body 152 will hereinafter be described in detail.

The lower cyclone body 156 is provided with a unit seating portion 160 allowing one end of the grille unit 170 to be seated thereon. The unit seating portion 160 may be provided with a coupling protrusion (not shown) to fix the grille unit 170, and a coupling groove 162 corresponding to the coupling protrusion (not shown) may be formed in the grille unit 170.

The grille unit 170 may be seated in the dust collection case 110 to filter out dust particles greater than a certain size contained in the air discharged from the first cyclone chamber 142.

The grille unit 170 may include a grille body 180 and an introduction pipe 182.

The introduction pipe 182 guides the air introduced from the inlet 111 of the suction port 220a to the first cyclone chamber 142. Accordingly, the introduction pipe 182 is arranged such that one end thereof communicates with the inlet 111 of the suction port 220a, and the other end thereof communicates with the first cyclone chamber 142.

The introduction pipe 182 may include an introduction pipe body 182a, an introduction hole 170a provided to one end of the introduction pipe body 182a to communicate with the inlet 111, and a guide part 184 provided to the other end of the introduction pipe body 182a to guide the air to the first cyclone chamber 142. The guide part 184 may extend from the introduction pipe body 182a such that it is bent in a radial direction with respect to the longitudinal direction of the introduction pipe body 182a.

The guide part 184 may include a discharge guide surface 184a formed in shape of a curved surface to allow the air guided through a first flow passage P1 in the introduction pipe body 182a to be spirally discharged with respect to the direction in which the first flow passage P1 extends. When the air discharged through the guide part 184 is diverted in a circumferential direction by a first airflow guide surface 167, the discharge guide surface 184a allows natural directional diversion by causing the air to be discharged along a spiral path.

By the above-mentioned structure, the air introduced through the suction part 21 may flow into the introduction pipe 182 through the inlet 111 and the introduction hole 170a, and may be discharged to the first cyclone chamber 142 through the guide part 184. A first flow passage P1 is formed in the introduction pipe 182, and the first flow passage P1 may be provided in a manner that the air introduced into the first cyclone chamber 142 passes through the first flow passage P1.

The grille body 180 may be configured to filter out dust particles greater than a certain size contained in the air discharged from the first cyclone chamber 142.

A discharge outlet 170b communicating with a discharge port 122 may be provided in the grille body 180. The air introduced into the grille body 180 through the first cyclone chamber 142 may be discharged to the outside of the grille unit 170 through the discharge outlet 170b provided to one end of the grille body 180. The air discharged through the discharge outlet 170b may be introduced into the second cyclone chamber 144 through the guide pipe 155.

The grille body 180 may partition the first cyclone chamber 142 from the discharge outlet 170b or the discharge port 122, such that dust separated by the swirling airflow generated by the first cyclone chamber 142 is not discharged through the discharge outlet 170b or the discharge port 122 via the first cyclone chamber 142. In more detail, a plurality of air through-holes 181 spaced apart from one another by a predetermined distance may be formed in the grille body 180. As a result, dust cannot pass through the air through-holes 181 and the air from which the dust is centrifugally separated can pass through the air through-holes 181.

The grille body 180 may be detachably coupled to the introduction pipe 182. Although the grille body 180 and the introduction pipe 182 according to the embodiment can be detachably coupled to each other for convenience of description and better understanding of the present disclosure, it should be noted that the grille body 180 and the introduction pipe 182 may be integrated into one body. The grille body 180 may be formed to enclose the introduction pipe 182. A second flow passage P2 may be formed between the grille body 180 and an outer surface of the introduction pipe 182. In more detail, the grille body 180 may be spaced a certain distance from the outer surface of the introduction pipe 182, so that a second flow passage P2 is formed between the grille body 180 and the outer surface of the introduction pipe 182.

The first flow passage P1 and the second flow passage P2 may be simultaneously formed in the grille unit 170. The first flow passage P1 is formed in the introduction pipe 182 so that the first flow passage P1 directs the air received from the introduction hole 170a. The second flow passage P2 is formed between the introduction pipe 182 and the grille body 180 so that the second flow passage P2 directs the air transferred from the first cyclone chamber 142 to the grille body 180 toward the discharge outlet 170b. The first flow passage P1 and the second flow passage P2 may be formed in the same direction. From a different standpoint, the introduction pipe body 182a and the grille body 180 may be arranged to have the same centerline with respect to the longitudinal direction.

Since the first flow passage P1 and the second flow passage P2 are simultaneously arranged in the grille body 170, the cyclone assembly 140 can be simplified in structure. In addition, since the first flow passage P1 and the second flow passage P2 are arranged in the grille unit 170 along the same direction, it is not necessary to additionally construct the air pipe directing the introduced air so as to transfer the air from the suction part 21 to the cyclone chambers 142 and 144, and the air received from the suction part 21 can immediately flow into the cyclone chambers 142 and 144, resulting in reduction of flow-passage resistance.

The cyclone assembly 140 may include an airflow formation part 166. The airflow formation part 166 may be formed to achieve swirling movement of the air directed from the introduction pipe 182 to the first cyclone chamber 142.

The airflow formation part 166 may form the swirling airflow in the air introduced into the first cyclone chamber 142. The airflow formation part 166 may be provided in the cyclone body 150. In addition, the airflow formation part 166 may be configured to form the swirling airflow when the air passing through the first flow passage P1 is discharged to the guide part 184 and flows into the first cyclone chamber 142. Although the airflow formation part 166 of the embodiment is formed in the cyclone body 150, the arrangement and shapes of the airflow formation part 166 can be modified in various ways.

The airflow formation part 166 may be formed along a circumference of the grille unit 170. That is, the airflow formation part 166 may be arranged in the cyclone body 150 along the circumference of the grille unit 170.

The airflow formation part 166 may include a first airflow guide surface 167 and a second airflow guide surface 168.

At least some parts of the first airflow guide surface 167 are concaved and formed to contact the air discharged from the introduction pipe 182 so that the air introduced into the first cyclone chamber 142 rotates (or swirls) around the circumferential direction on the basis of the grille unit 170. That is, the first airflow guide surface 167 may be concaved in a manner that the proceeding direction of the air discharged to the guide part 184 can be bent in the circumferential direction. In addition, the first airflow guide surface 167 may be curved in a manner that the air discharged from the guide part 184 can be naturally diverted. The first airflow guide surface 167 may be modified in various shapes.

The second airflow guide surface 168 may be a guide surface tilted toward the first cyclone chamber 142 in the circumferential direction on the basis of the grille unit 170. The grille unit 170 is arranged below the cyclone body 150, so that the second airflow guide surface 168 may protrude downward from the cyclone body 150 in the circumferential direction on the basis of the grille unit 170. By the above-mentioned construction, the air rotating or swirling in the circumferential direction by the first airflow guide surface 167 may move toward the first cyclone chamber 142.

The guide part 184 provided at one end of the introduction pipe 182 is located adjacent to the air through-holes 182 of the grille body 180, so that the air discharged from the guide part 184 may directly flow into the air through-holes 181f. To address the above-mentioned problem, the grille unit 170 may further include an airflow formation rib 186.

The airflow formation rib 186 may be provided toward the first cyclone chamber 142 in a manner that the airflow formation rib 186 is located close to the guide part 184. By formation of the airflow formation rib 186, the air discharged from the guide part 184 is separated from the grille body 180, so that the discharged air may flow into the first cyclone chamber 142.

The grille unit 140 may further include a flange grille unit 188.

The flange grille unit 188 may be configured to partition the first cyclone chamber 142 and the first dust collection chamber 205a from each other. The flange grille unit 188 may extend from the outer surface of the introduction pipe 182 so as to prevent dust collected in the first dust collection chamber 205a from flowing backward and then moving to the first cyclone chamber 142.

The flange grille unit 188 may be formed in a grille shape to prevent movement of dust. In addition, the flange grille unit 188 may contact a lower portion of the grille body 180 so as to prevent dust separated by centrifugal force from flowing into the second flow passage P2. A plurality of air through-holes 181 may also be formed in the flange grille unit 188 in the same manner as in the grille body 180.

In addition, the flange grille unit 188 may be tilted toward the first dust collection chamber 205a so as to prevent air from flowing backward from the first dust collection chamber 205a to the first cyclone chamber 142. That is, the flange grille unit 188 disposed between the first cyclone chamber 142 and the first dust collection chamber 205a may be formed in a flange shape tilted toward the first dust collection chamber 205a, such that the flange grille unit 188 may effectively prevent air from flowing backward from the first dust collection chamber 205a.

The cyclone assembly 150 may further include a second cyclone chamber 144.

The second cyclone chamber 144 may be arranged in the radial direction of the first cyclone chamber 142. The second cyclone chamber 144 may be provided in at least one cyclone 300. In addition, the second cyclone chamber 144 may secondarily separate the primarily purified air received from the first cyclone chamber 142 using centrifugal force. In more detail, the air introduced from the first cyclone chamber 142 to the grille unit 170 may move to at least one cyclone 300 through the guide pipe 155 of the cyclone body 150, and may be secondarily separated from the dust through centrifugal processing in the second cyclone chamber 144 provided in at least one cyclone 300.

At least one cyclone 300 may be arranged to separate the dust from the air introduced through the inlet 111.

At least one cyclone 300 may be arranged in the dust collection case 110.

At least one cyclone 300 may be provided in the dust collection case 110 to separate the dust from the air introduced through the inlet 111. In more detail, at least one cyclone 300 may be arranged along the circumference of the lower cyclone body 156.

A cleaning member 400 may be provided in at least one cyclone 300. The cleaning member 400 may be provided in at least one cyclone such that the cleaning member 400 can clean an inner wall of the at least one cyclone 300. The at least one cyclone 300 and the cleaning member 400 will hereinafter be described in detail.

FIGS. 8A to 8H are cross-sectional views various shapes of a cleaning member disposed in at least one cyclone according to a first embodiment of the cleaner of the present disclosure. Reference numerals (not shown) will refer to FIGS. 1 to 7b. FIGS. 8A to 8H illustrate the cleaning member 400 for use in an OFF-state cleaner 1. In more detail, the cleaning member 400 illustrated in FIGS. 8A to 8H is used when the cleaner 1 does not operate.

The second cyclone chamber 144 may be formed in at least one cyclone 300. The dust is centrifugally separated from the air in the second cyclone chamber 144.

At least one cyclone 300 may include an air inlet 301 and a dust outlet 302. The air inlet 301 may be formed in a manner that the air introduced through the inlet 111 flows into at least one cyclone 300. The dust outlet 302 may be opened toward the dust collection container 200. Alternatively, the dust outlet 302 may communicate with the dust collection container 200. In addition, the air inlet 301 may be located at an upper part of at least one cyclone 300 in the longitudinal direction L. The dust outlet 302 may be located at a lower portion of at least one cyclone 300 in the longitudinal direction L. That is, the dust outlet 302 along with the air inlet 301 may be arranged along the longitudinal direction L of at least one cyclone 300 in such a manner that the dust separated from the air introduced through the air inlet 301 can be discharged.

In another aspect of the present disclosure, at least one cyclone 300 may include a body 303, an air inlet 301 and a dust outlet 302. The body 303 may form the external appearance of at least one cyclone 300. The air inlet 301 and the dust outlet 302 may be respectively formed at both ends of the body 303.

The air inlet 301 may be relatively large in width and the dust outlet 302 may be relatively small in width. That is, the air inlet 301 may be larger in width than the dust outlet 302, so that the dust separation efficiency of at least one cyclone 300 can be maximized. That is, the dust outlet 302 is formed to be smaller in width than the air inlet 301, so that centrifugal force of the air having the dust (i.e., the polluted air) can be increased. Greater centrifugal force may occur in the dust outlet 302 having a relatively smaller width.

The body 303 may include at least one of a planar surface and a curved surface. The curved surface may include at least one of a convex surface curved outward of at least one cyclone 300 and a concave surface curved inward of at least one cyclone 300.

At least one cyclone 300 may be formed in a conical shape. The air inlet 301 may be provided at one end of at least one cyclone 300, and the dust outlet 302 may be provided at the other end of at least one cyclone 300. A diameter of the air inlet 301 may be larger than that of the dust outlet 302. If at least one cyclone 300 is formed in a conical shape, the body 303 may be formed to have a planar surface. However, the shape of at least one cyclone 300 is not limited to the conical shape.

At least one cyclone 300 may be symmetrical on the basis of the symmetric axis S parallel to the longitudinal direction L of the at least one cyclone 300.

A cleaning member 400 may be provided in at least one cyclone 300. Dust separated from the air may be accumulated on the inner wall of at least one cyclone 300. That is, although the dust separated from the air must be discharged to the dust collection container 200 through the dust outlet 302, some of the dust may remain on the inner wall of at least one cyclone 300. If the amount of residual dust attached on the inner wall of at least one cyclone 300 increases, the second cyclone chamber 144 may be clogged with dust or dirt. In other words, because of the residual dust attached on the inner wall of at least one cyclone 300, the at least one cyclone 300 may have difficulty in centrifugally separating the dust from the air. Therefore, the cleaning member 400 may be provided in at least one cyclone 300 such that the cleaning member 400 can clean the dust accumulated on the inner wall of the at least one cyclone 300. At least one cleaning member 400 may be provided in at least one cyclone 300.

The cleaning member 400 may rotate along the inner wall of at least one cyclone 300. The cleaning member 400 may rotate not only by vibration of the cleaner 1, but also by the swirling airflow formed in the second cyclone chamber 144. The swirling airflow may be formed by operations of the fan motor (not shown).

In addition, the cleaning member 400 may rotate simultaneously while being brought into contact with the inner wall of at least one cyclone 300. That is, the cleaning member 400 may be provided in at least one cyclone 300 (i.e., the second cyclone chamber 144) in a manner that the cleaning member 400 can rotate while simultaneously contacting the inner wall of at least one cyclone 300. Since the cleaning member 400 is installed to rotate while simultaneously contacting the inner wall of the at least one cyclone 300, the cleaning member 400 may directly or physically remove the dust accumulated on the inner wall of the at least one cyclone 300, resulting in increased cleaning efficiency.

In addition, the cleaning member 400 may rotate while simultaneously contacting at least a portion of the inner wall of the at least one cyclone 300. That is, the cleaning member 400 may rotate while simultaneously contacting the entire inner wall of the at least one cyclone 300, and may rotate while simultaneously contacting a portion of the inner wall of the at least one cyclone 300.

The cleaning member 400 may rotate while simultaneously contacting the dust outlet 302, such that the cleaning member 400 may prevent the dust outlet 302 having a relatively small width from being clogged with the dust or dirt.

In addition, the cleaning member 400 may rotate during rotation of the cleaner 1. That is, the cleaning member 400 may rotate not only by vibration of the cleaner 1, but also by the swirling airflow formed in the second cyclone chamber 144, such that the cleaning member 400 may rotate when the cleaner 1 is turned on. As described above, a separate power-supply voltage for rotating the cleaning member 400 need not be supplied to the cleaning member 400, resulting in increased energy efficiency. Of course, a separate power line is connected to the cleaning member 400 so that the cleaning member 400 may also rotate irrespective of the operation state of the cleaner 1.

In addition, under the condition that one end of the cleaning member 400 is fixed, the cleaning member 400 may rotate. In other words, the cleaning member 400 may be provided in at least one cyclone 300 such that one end of the cleaning member 400 is fixed and the cleaning member 400 then rotates. In more detail, under the condition that one end of the cleaning member 400 extending toward the air inlet 301 is fixed, the cleaning member 400 may rotate.

The cleaning member 400 may be formed of deformable material such that the rotating cleaning member 400 can contact the inner wall of at least one cyclone 300. In other words, the cleaning member 400 may be formed of flexible material such that the rotating cleaning member 400 may be bent or curved. The cleaning member 400 may include at least one of metal, plastic, silicon, glass fiber, and rubber.

The cleaning member 400 may extend in the longitudinal direction L of at least one cyclone 300. In more detail, the cleaning member 400 may extend in the longitudinal direction L of at least one cyclone 300 such that one end of the cleaning member 400 may be located to face the dust outlet 302.

The cleaning member 400 may be longer than the at least one cyclone 300 corresponding to the air inlet 301 and the dust outlet 302. That is, the cleaning member 400 may be longer than at least one cyclone 300 corresponding to the air inlet 301 and the dust outlet 302 in the longitudinal direction L of the at least one cyclone 300. However, the length of the cleaning member 400 is not limited thereto, and may be identical to or shorter than the length of at least one cyclone 300 corresponding to the air inlet 301 and the dust outlet 302.

Referring to FIG. 8A, the cleaning member 400 may be provided in at least one cyclone 300 in a manner that the cleaning member 400 does not protrude through the dust outlet 302. That is, one end of the cleaning member 400 facing the dust outlet 302 may be located at the same position as the dust outlet 302 in the longitudinal direction L of the at least one cyclone 300.

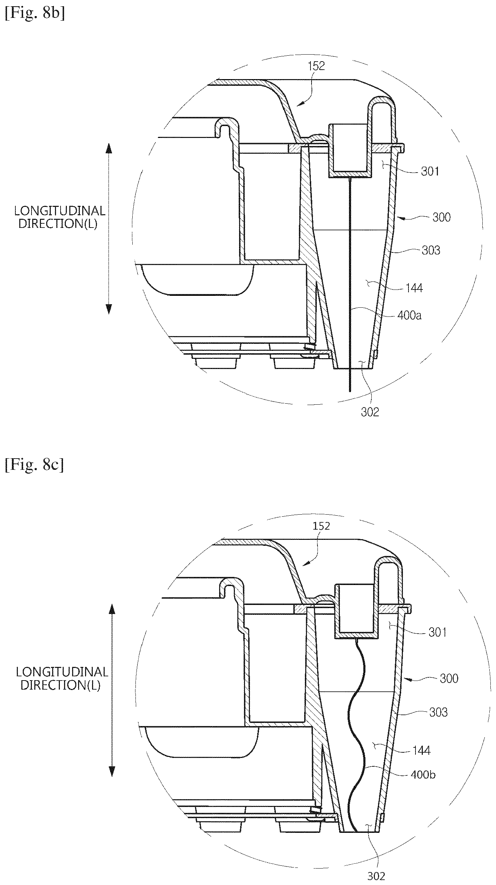

Referring to FIG. 8B, the cleaning member 400a may be provided in at least one cyclone 300 in a manner that one end of the cleaning member 400a may protrude through the dust outlet 302. That is, the cleaning member 400a may be provided in at least one cyclone 300 in a manner that one end of the cleaning member 400a may protrude toward the dust collection container 200 after passing through the dust outlet 302.

Referring to FIGS. 8A and 8B, the cleaning members 400 and 400a may be formed in a straight shape. In other words, the cleaning members 400 and 400a may linearly extend in the longitudinal direction L of at least one cyclone 300. The cleaning members 400 and 400a may linearly extend in the longitudinal direction L of at least one cyclone 300 in a manner that each of the cleaning members 400 and 400a may be spaced apart from the at least one cyclone 300 by a predetermined distance.

Referring to FIG. 8C, the cleaning member 400b may be formed to have a curved shape. In other words, the cleaning member 400b may be formed in a zigzag-curved shape. The cleaning member 400b may be formed to have a zigzag-curved shape in the longitudinal direction L of at least one cyclone 300 in a manner that the cleaning member 400b may be spaced apart from the inner wall of the at least one cyclone 300.

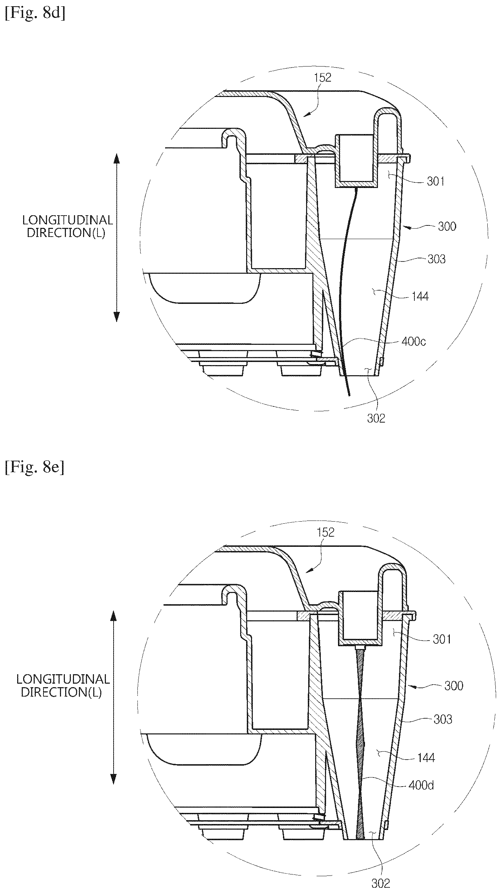

Referring to FIG. 8D, the cleaning member 400c may be formed in a zigzag-curved shape in a manner that the cleaning member 400c can contact the inner wall of the at least one cyclone 300.

Referring to FIG. 8E, the cleaning member 400d may be different from the at least one cyclone 300 in terms of a longitudinal cross-sectional width or shape of the at least one cyclone 300. The cleaning member 400d may be spaced apart from the inner wall of the at least one cyclone 300.

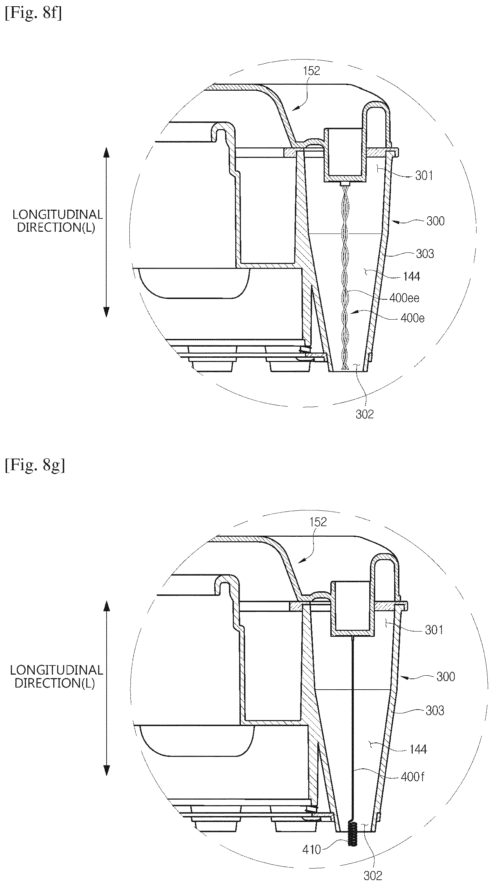

Referring to FIG. 8F, the cleaning member 4003 may be coupled to a plurality of unit cleaning members 400ee. That is, the cleaning member 400e may be elongated in the longitudinal direction L of the at least one cyclone 300 by weaving of the plurality of unit cleaning members 400ee. Preferably, a plurality of thin unit cleaning members 400ee may be woven (or combined) with each other so as to simultaneously satisfy flexibility and strength of the cleaning member 400e, resulting in formation of the cleaning member 400e.

Referring to FIG. 8G, a mass 410 may be coupled to the cleaning member 400f in a manner that a contact strength of the cleaning member 400f can increase with respect to the inner wall of the at least one cyclone 300. That is, when the mass 410 is coupled to the cleaning member 400f, the cleaning member 400f may generate relatively stronger rotational force and the contact strength against the inner wall of the at least one cyclone 300 may increase, resulting in increased cleaning efficiency.

The mass 410 may be integrated with the cleaning member 400f. The mass 410 may have various coupling positions. However, the mass 410 may be preferably coupled to one end of the cleaning member 400f extending to the dust outlet 302. Alternatively, the mass 410 may be coupled to the cleaning member 400f in a manner that contact strength of the cleaning member 400f can increase with respect to the dust outlet 302.

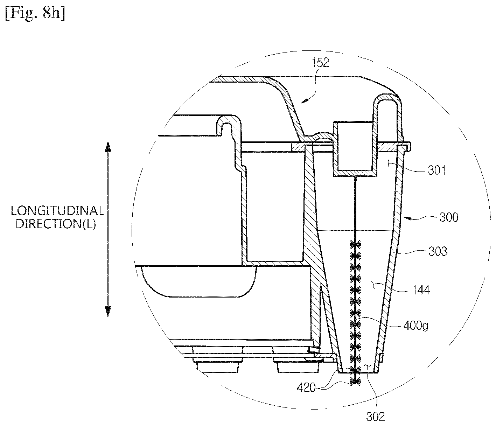

Referring to FIG. 8H, at least one auxiliary cleaning member 420 may be coupled to the cleaning member 400g. The at least one auxiliary cleaning member 420 may rotate along with the cleaning member 400g in a manner that the at least one auxiliary cleaning member 420 can clean the inner wall of the at least one cyclone 300 while simultaneously contacting the inner wall of the at least one cyclone 300. The at least one cleaning member 420 may have various coupling positions. However, the auxiliary cleaning member 420 may be coupled to a lower end of the cleaning member 400g located close to the dust outlet 302 in the longitudinal direction L of the at least one cyclone 300.

The shapes of the cleaning members 400, 400a, 400b, 400c, 400d, 400e, 400f, and 400g are not limited to the embodiment of FIGS. 8A to 8H, and may be changed in various ways.

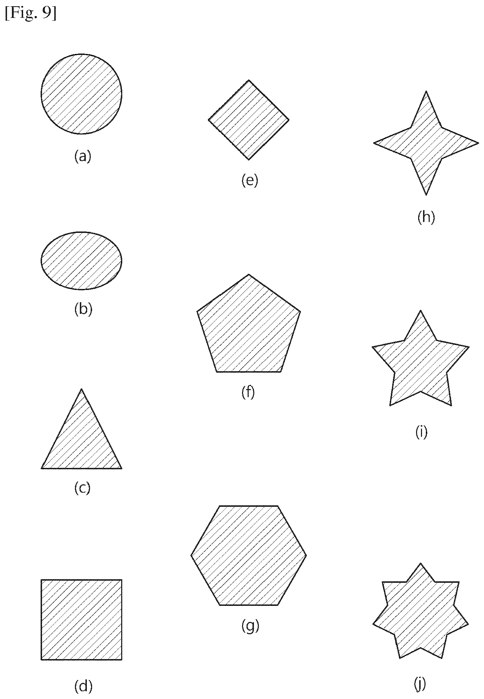

FIG. 9 illustrates various cross-sectional shapes of the cleaning member disposed in at least one cyclone according to a first embodiment of the cleaner of the present disclosure. Reference numerals (not shown) will refer to FIGS. 1 to 8H.

Referring to FIG. 9, the cleaning member 400 may have a cross section including at least one of a conic section and a polygonal section. The conic section may include a circle, an oval, a parabola, and a hyperbola. The polygonal section may include a triangle, a square, a quadrangle, a pentagon, a hexagon, a diamond, etc.

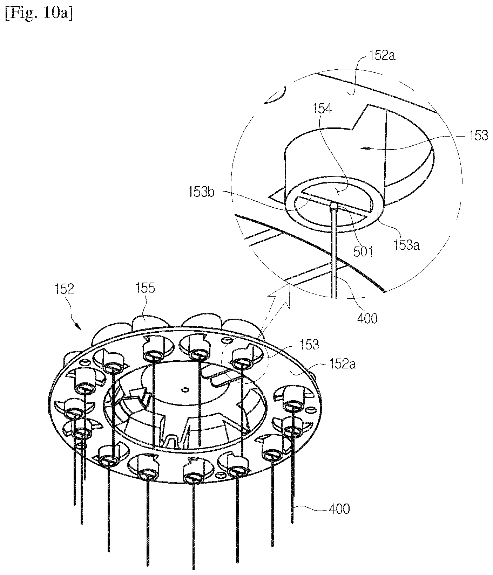

FIGS. 10A to 10F illustrate various coupling structures of a coupling member disposed in at least one cyclone according to a first embodiment of the cleaner of the present disclosure. Reference numerals (not shown) will refer to FIGS. 1 to 8F.

The cleaning member 400 may be provided in at least one cyclone 300 in a manner that one end thereof is fixed. In more detail, the cleaning member 400 may be provided in at least one cyclone 300 in a manner that one end of the cleaning member 400 extending to the air inlet 301 can be fixed.

The cleaning member 400 may be coupled to the upper cyclone body 152 in a manner that the cleaning member 400 can rotate in the at least one cyclone 300.

The upper cyclone body 152 may include a base 152a, an introduction pipe 155, and at least one protrusion 153. The introduction pipe 155 and the at least one protrusion 153 may be arranged to face each other on the basis of the base 152a interposed therebetween. The introduction pipe 155 may be disposed at an upper part of the base 152a in the longitudinal direction L of at least one cyclone 300, and the at least one protrusion 153 may be disposed at a lower part of the base 152a in the longitudinal direction L of the at least one cyclone 300. The at least one protrusion 153 may have a protrusion shape to be inserted into the air inlet 301. In other words, the at least one protrusion 153 may protrude downward in the longitudinal direction L of the at least one cyclone 300 such that the at least one protrusion 153 can be inserted into the air inlet 301.

The at least one protrusion 153 may include an exhaust outlet 154 configured to communicate with the at least one cyclone 300, such that the air from which dust is separated is exhausted outside through the exhaust outlet 154.

The at least one protrusion 153 may include an edge portion 153a formed along an outer circumference of the exhaust outlet 154, and a bridge 153b configured to cross the exhaust outlet 154. Both ends of the bridge 153b may be coupled to the edge portion 153a. The bridge 153b may partition the discharge outlet 153 into a plurality of sections.

The cleaning member 400 may be coupled to at least one protrusion 153 in a manner that the cleaning member 400 can rotate in the at least one cyclone 300.

Referring to FIG. 10A, the cleaning member 400 may be coupled to the bridge 153b of the at least one protrusion 153. The cleaning member 400 may be provided in at least one cyclone 300 in a manner that the cleaning member 400 is located over a symmetric axis S illustrated in FIG. 8A. In more detail, the cleaning member 400 may be coupled to the bridge 153b in a manner that the cleaning member 400 is located over the symmetric axis S. A coupling groove (not shown) and a coupling protrusion 501 may be provided in the bridge 153b such that the cleaning member 400 can be coupled to the bridge 153b.

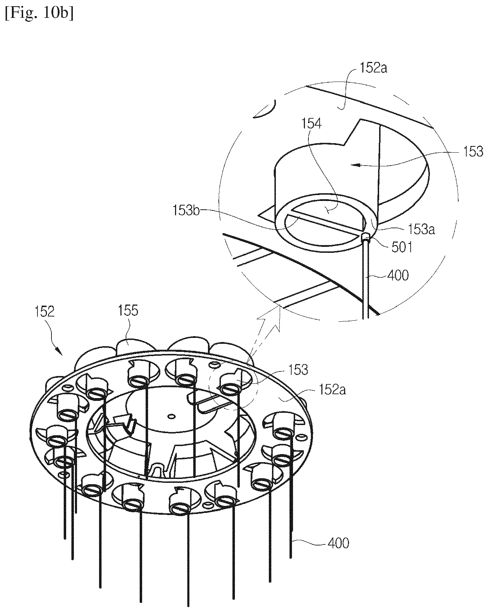

Referring to FIG. 10B, the cleaning member 400 may be coupled to the edge portion 153a of at least one protrusion 153. The cleaning member 400 may be provided in at least one cyclone 300 in a manner that the cleaning member 400 can be disposed between the symmetric axis S and the inner wall of the at least one cyclone 300. In more detail, the cleaning member 400 may be coupled to the edge portion 153a in a manner that the cleaning member 400 can be disposed between the symmetric axis S and the inner wall of the at least one cyclone 300. The edge portion 153 may include the coupling groove (not shown) and the coupling protrusion 501 in a manner that the cleaning member 400 can be coupled to the edge portion 153a.

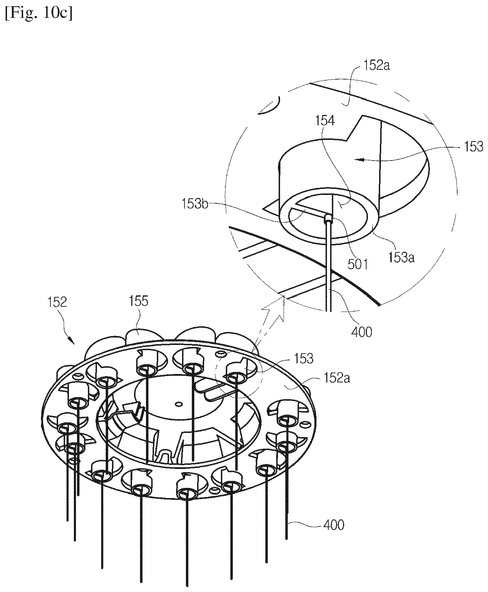

Referring to FIG. 10C, the cleaning member 400 may be coupled to the bridge 153b of at least one protrusion 153. The bridge 153b may be arranged to cross some parts of the exhaust outlet 154. In more detail, one end of the bridge 153b may be coupled to the edge portion 153a, and the other end thereof may be provided in the at least one protrusion 153. The cleaning member 400 may be coupled to the other end of the bridge 153b located in the at least one protrusion 153. In addition, the other end of the bridge 153b located in at least one protrusion 153 may be located over the symmetric axis S illustrated in FIG. 8A. Therefore, the cleaning member 400 coupled to the other end of the bridge 153b located in the at least one protrusion 153 may be located over the symmetric axis S. The coupling groove (not shown) and the coupling protrusion 501 may be provided in the bridge 153b such that the cleaning member 400 can be coupled to the bridge 153b. The shapes of the bridge 153b capable of being coupled to the cleaning member 400 are not limited thereto, and the shapes of the bridge 153b may be changed in various ways.

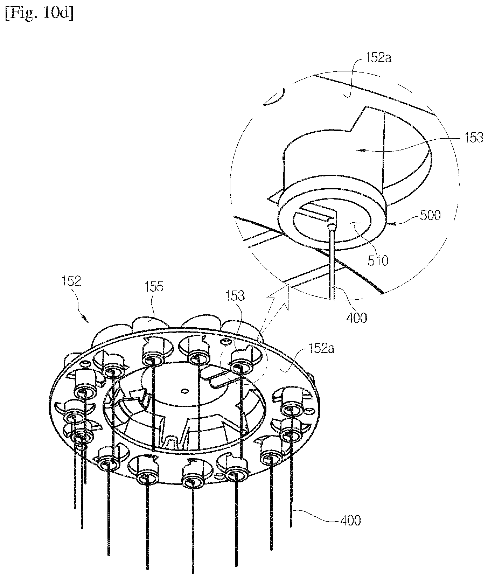

Referring to FIG. 10D, the cleaning member 400 may be integrated with the coupling member 500 detachably coupled to at least one protrusion 153. The coupling member 500 may include a hollow portion 510 corresponding to the exhaust outlet 154. The air from which dust is separated may sequentially pass through the hollow portion 510 and may then be discharged to the outside of the dust collector 100. The coupling member 500 may be coupled to at least one protrusion 153 along the circumference of the exhaust outlet 154. In more detail, the coupling member 500 may be coupled to at least one protrusion 153 to enclose the outer circumference of the edge portion 153a.

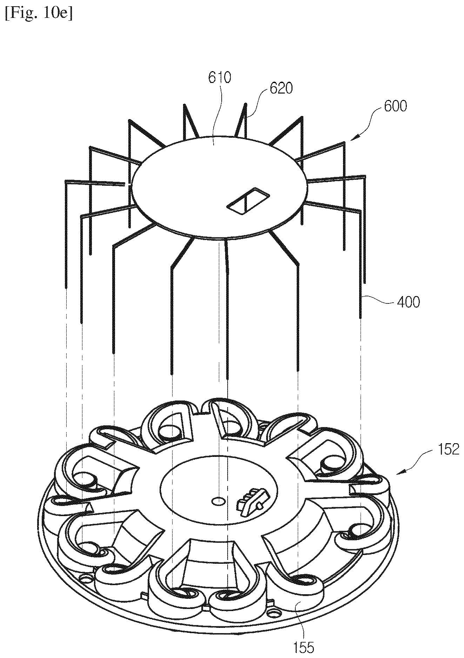

Referring to FIG. 10E, the cleaning member 400 may be integrated with a fastening member 600. Each cleaning member 400 provided in at least one cyclone 300 may be integrated with the fastening member 600. In more detail, the fastening member 600 may include a plate 610 and at least one branch 620 arranged along a circumference of the plate 610. At least one branch 620 may be radially arranged along the circumference of the plate 610. The plate 610 and the at least one branch 620 may be integrated with each other. The number of one or more branches 620 may correspond to the number of one or more cyclones 300, each of which includes the cleaning member 400. The cleaning member 400 may be coupled to at least one branch 620. The cleaning member 400 may be integrated with at least one branch 620. Alternatively, the cleaning member 400 may be integrated with the at least one branch 620 and the plate 610. Each cleaning member 400 provided in at least one cyclone 300 may be coupled to the fastening member 600 after passing through the exhaust outlet 154. That is, each cleaning member 400 coupled to at least one branch 620 of the fastening member 600 may be located in the at least one cyclone 300 after passing through the exhaust outlet 154.

The fastening member 600 may be detachably coupled to the upper cyclone body 152. In more detail, the fastening member 600 may be detachably coupled to an upper part of the upper cyclone body 152 in the longitudinal direction L of at least one cyclone 300. In addition, the fastening member 600 may be disposed between the filter member 134 and the upper cyclone body 152.

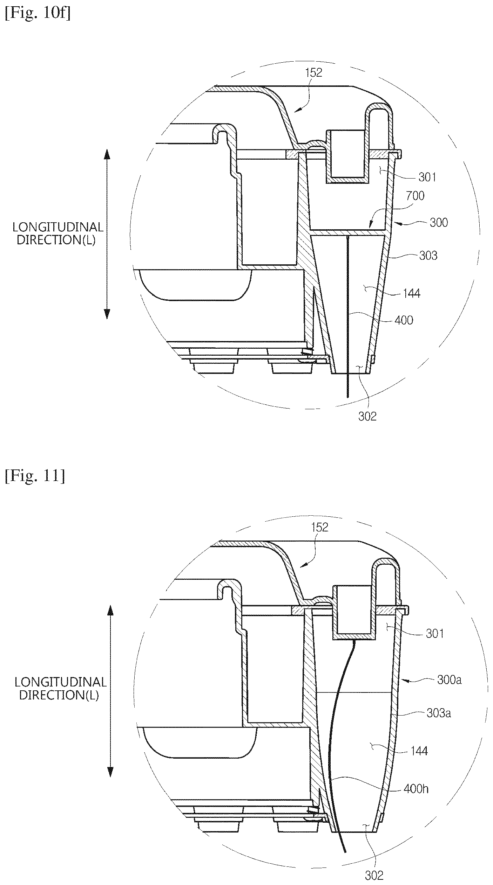

Referring to FIG. 10F, the cleaning member 400 may be integrated with a fixing member 700 detachably disposed in the at least one cyclone 300.

The fixing member 700 may be detachably disposed in the at least one cyclone 300. In more detail, the fixing member 700 may be detachably coupled to a fixing groove (not shown) and a fixing protrusion (not shown) formed at the inner wall of the at least one cyclone 300.

The fixing member 700 may include an opening hole (not shown) through which the air and dust can move in the at least one cyclone 300.

The cleaning member 400 may be coupled to the fixing member 700 and may be elongated in the longitudinal direction L of at least one cyclone 300 such that the cleaning member 400 may be located to face the dust outlet 302.

The fixing member 700 may be arranged to occupy at least a half of the longitudinal direction L of the at least one cyclone 300 on the basis of the dust outlet 302. However, the arrangement position of the fixing member 700 is not limited thereto.

The cleaning member 400 is integrated with the coupling member 500 of FIG. 10C, the fastening member 600 of FIG. 10D, or the fixing member 700 of FIG. 10E, such that the cleaning member 400 can be easily repaired and replaced with others.

FIG. 11 is a cross-sectional view illustrating at least one cyclone according to a second embodiment of the cleaner of the present disclosure. Reference numerals (not shown) will refer to FIGS. 1 to 8H.

Referring to FIG. 11, the inner wall of at least one cyclone 300a may include a curved surface. That is, the body 303a may include a curved surface. The curved surface may include at least one of a convex surface curved outward of at least one cyclone 300a and a concave surface curved inward of the at least one cyclone 300a.

The cleaning member 400h may be formed in a curved shape in a manner that the cleaning member 400h can contact the inner wall of at least one cyclone 300a.

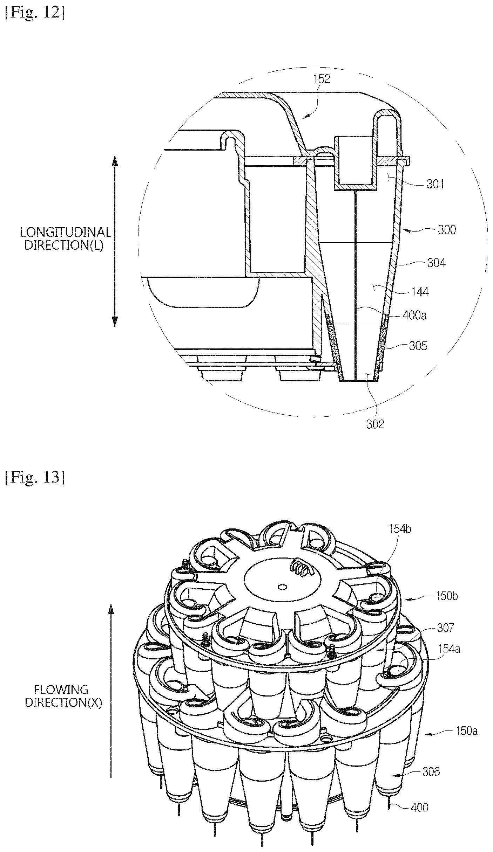

FIG. 12 is a cross-sectional view illustrating at least one cyclone according to a third embodiment of the cleaner of the present disclosure. Reference numerals (not shown) will refer to FIGS. 1 to 8H.

Referring to FIG. 12, at least one cyclone 300 may include a first part 304 and a second part 305. The first part 304 may be provided at an upper end of at least one cyclone 300 in the longitudinal direction L of the at least one cyclone 300. The second part 305 may be provided at a lower end of the at least one cyclone 300 in the longitudinal direction L of the at least one cyclone 300.

The first part 304 may include the air inlet 301, and the second part 305 may include the dust outlet 302. The first part 304 and the second part 305 may be formed of different materials. Specifically, the second part 305 may be formed of a deformable material such that the second part 305 can vibrate during operation of the cleaner 1. The cleaning member 400 may be provided in at least one cyclone 300 in a manner that the cleaning member 400 can rotate while being in contact with the inner wall of at least one of the first part 304 and the second part 305.

FIG. 13 is a perspective view illustrating a cyclone body of a cleaner according to another embodiment of the present disclosure. Reference numerals (not shown) will refer to FIGS. 1 to 8H.

Referring to FIG. 13, the cyclone body 150 may have a stacked structure. In more detail, the cyclone body 150 may include a first cyclone body 150a located upstream of the flowing direction X, and a second cyclone body 150b located downstream of the flowing direction X. At least one first cyclone 306 may be arranged in the first cyclone body 150a, and at least one second cyclone 307 may be arranged in the second cyclone body 150b. The first cyclone body 150a and the second cyclone body 150b may be stacked to prevent the respective exhaust outlets 154a and 154b from being interfered or closed. The cleaning member 400 may be provided in each of the at least one first cyclone 306 and the at least one second cyclone 307. The cleaning member 400 provided in the at least one first cyclone 306 may be different in material and shape from the cleaning member (not shown) provided in the at least one second cyclone 307. Alternatively, the respective cleaning members 400 provided in the at least one first cyclone 306 may be different from each other in terms of material and shape. The respective cleaning members (not shown) provided in the at least one second cyclone 307 may be different from each other in terms of material and shape. However, information indicating whether the respective cleaning members are identical to each other in terms of material and shape may be modified in various ways.

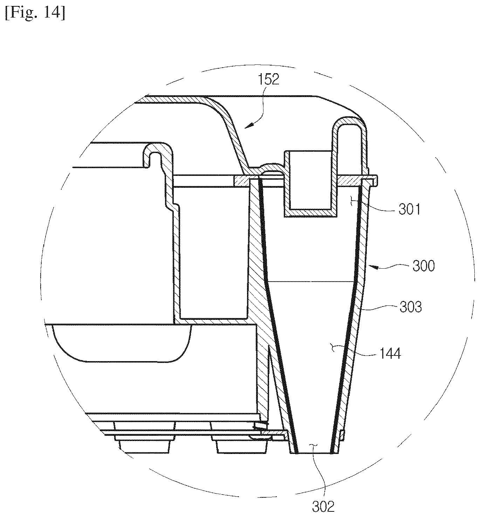

FIG. 14 is an enlarged cross-sectional view illustrating a portion of a cyclone body of a cleaner according to an arrangement which is not an embodiment of the present disclosure. Reference numerals (not shown) will refer to FIGS. 1 to 8H.

Referring to FIG. 14, the inner wall of at least one cyclone 300 may be coated or surface-processed to prevent accumulation of the dust separated from the air. For example, the inner wall of at least one cyclone 300 may be surface-processed in a manner that one or more concavo-convex portions may be formed at the inner wall of the at least one cyclone 300. That is, when the concavo-convex portions are formed at the inner wall of the at least one cyclone 300, a contact region between the dust and the inner wall of the at least one cyclone 300 is reduced in size, such that it is difficult for the dust to be accumulated on the inner wall of the at least one cyclone 300.

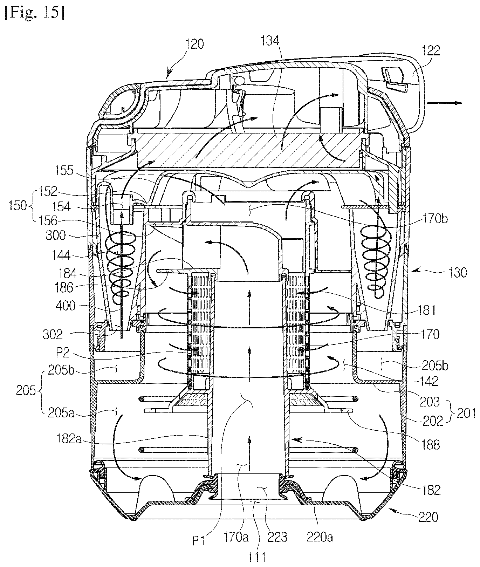

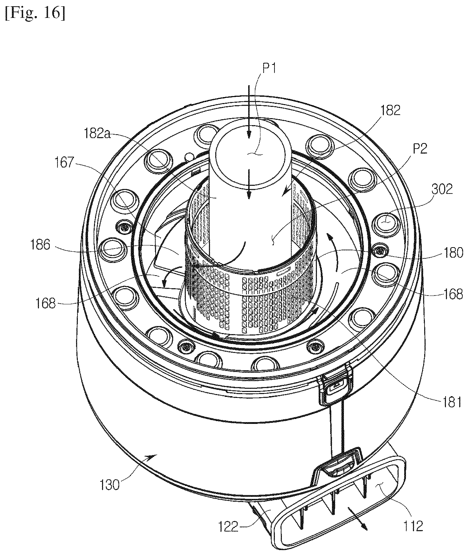

FIGS. 15 and 16 illustrate flow of air within a cyclone dust collector of the cleaner according to an embodiment of the present disclosure. Reference numerals (not shown) will refer to FIGS. 1 to 7B.

Referring to FIGS. 15 and 16, the air introduced from the suction part 21 may flow into the dust collector 100 after passing through the extension pipe 20 and the flexible hose 23. The suction port 220a may be provided at a lower part of the dust collector 100, such that the air introduced from the flexible hose 23 may directly flow into the dust collector 100 without bypassing the side portion of the first cyclone chamber 142.

The air introduced into the dust collector 100 flows into the grille unit 170 through the introduction hole 170a communicating with the suction port 220a in the dust collector 100, and is then guided through the first flow passage P1 of the introduction pipe 182. After passing through the first flow passage P1, the air is discharged to the first cyclone chamber 142 through the guide part 184. The air discharged through the guide part 184 is spirally discharged by the discharge guide surface 184a.

The swirling airflow may be generated by the airflow formation part 166 during the air discharge process. In more detail, a circumferential airflow may occur by the first airflow guide surface 167, and a vertical airflow may occur by the second airflow guide surface 168.

In the above-mentioned process, the air discharged from the airflow formation part 166 may be spaced in a radial direction from the grille unit 170 by the airflow formation rib 186, resulting in formation of the rotating or swirling airflow. That is, the airflow formation rib 186 may prevent the air discharged through the guide part 184 from directly flowing into the inner space of the grille body 180.

The swirling (or rotating) airflow is formed in the first cyclone chamber 142 so that the dust is centrifugally separated from the air. The air centrifugally separated from the air may be collected in the first dust collector 205a. The air from which the dust is separated may be discharged to the discharge outlet 170b through the second flow passage P2 formed in the grille body 180. The flange grille unit 188 may be disposed between the first dust collection chamber 205a and the first cyclone chamber 142, such that the flange grille unit 188 may prevent the swirling airflow from flowing backward into the first cyclone chamber 142 even when the swirling airflow is formed in the first dust collection chamber 205a.

The air discharged to the discharge outlet 170b may move to the second cyclone chamber 144 through the guide pipe 155 of the cyclone body 150. The second cyclone chamber 144 may be provided in at least one cyclone 300, and the air forms the swirling airflow in the second cyclone chamber 144 so that centrifugal separation of the air is completed.

During the centrifugal separation process, the dust is discharged to the second dust collection chamber 205b through the dust discharge outlet 302, and the air separated from the dust is discharged to an upper part of the cyclone body 150 through the exhaust outlet 154.

The cleaner 1 according to the embodiments may include a canister cleaner, an upright cleaner, and a handheld cleaner, without being limited thereto.

Although the embodiments of the present disclosure have been disclosed for illustrative purposes, those skilled in the art will appreciate that various modifications, additions and substitutions are possible.

## Claims

1. A cleaner (1) including a dust collector (100) configured to separate dust from air through centrifugation, comprising:
the dust collector (100) including:
a dust collection case (110) having an inlet (111) through which air is introduced and an outlet (112) through which the air is discharged; and
at least one dust separator (300) arranged to separate dust from the air introduced through the inlet (111),
wherein a cleaning member (400) is provided in the at least one dust separator (300) such that the cleaning member (400) cleans at least a portion of an inner wall of the at least one dust separator (300), and
the at least one dust separator (300) includes:
an air inlet (301) through which the air introduced through the inlet (111) flows into the at least one dust separator (300),
a dust outlet (302) through which dust separated from the air is discharged, and
at least one protrusion (153) including an exhaust outlet (154) through which the air from which dust is separated is exhausted outside and provided to be inserted into the air inlet (301),
wherein the protrusion (153) protrudes downward of the air inlet (301), and
the air inlet (301) and the dust outlet (302) are arranged to face each other.

2. The cleaner according to claim 1, wherein the cleaning member (400) rotates while contacting at least a portion of the inner wall of the at least one dust separator (300).

3. The cleaner according to claim 1, wherein the cleaning member is formed of a plurality of woven strands.

4. The cleaner according to claim 1, wherein the cleaning member (400) is elongated in a longitudinal direction of the at least one dust separator (200) in a manner that one end of the cleaning member (400) faces the dust outlet (302).

5. The cleaner according to claim 4, wherein:
the one end of the cleaning member (400) passes through the dust outlet (302), and protrudes toward a dust container (200).

6. The cleaner according to claim 1, wherein the cleaning member (400) includes a cross section including at least one of a conic section and a polygonal section.

7. The cleaner according to claim 1, wherein the cleaner member (400) is coupled to a mass (410) to increase contact strength of the cleaning member (400) with respect to the inner wall of the at least one dust separator (300).

8. The cleaner according to claim 1, wherein an auxiliary cleaning member (420) is coupled to the cleaning member (400),
wherein the auxiliary cleaning member (420) contacts the inner wall of the at least one dust separator (300), and rotates along with the cleaning member (400) to clean the inner wall of the at least one dust separator (300).

9. The cleaner according to claim 8, wherein the auxiliary cleaning member (420) includes a brush.

10. The cleaner according to claim 1, wherein the cleaning member (400) is formed of a deformable material such that the cleaning member (400) contacts the inner wall of the at least one dust separator (300) according to rotation movement thereof.

11. The cleaner according to claim 10, wherein the cleaning member (400) includes at least one of metal, plastic, silicon, glass fiber, and rubber.

12. The cleaner according to claim 1, wherein the cleaning member (400) is provided in the at least one dust separator (300) in a manner that one end thereof is fixed.

13. The cleaner according to claim 1, wherein:
the dust collector (300) further includes a cover (152) coupled to the at least one dust separator (300) in a manner that air introduced through the inlet (111) is guided to the at least one dust separator (300); and
the cleaning member (400) is coupled to the cover (152) in a manner that the cleaning member (400) rotates in the at least one dust separator (300).

14. The cleaner according to claim 13, wherein:
the cover (152) includes the at least one protrusion (153) having a protrusion shape to be inserted into the air inlet (301); and
the cleaning member (400) is coupled to the at least one protrusion (153) in a manner that the cleaning member (400) rotates in the at least one dust separator (300).

15. The cleaner according to claim 1, wherein:
the dust collector (300) further includes a cover (152) coupled to the at least one dust separator (300) in a manner that air introduced through the inlet (111) is guided to the at least one dust separator (300);
each cleaning member (400) provided in the at least one dust separator (300) is coupled to a fastening member (600) disposed in the cover (152); and
the fastening member (600) and the cleaning member (400) are integrated with each other.

## Patentansprüche

1. Reiniger (1), der einen Staubsammler (100) umfasst, der konfiguriert ist, um durch Zentrifugierung Staub von Luft zu trennen, der Folgendes beinhaltet:
den Staubsammler (100), der Folgendes umfasst:
einen Staubsammelkasten (110), der einen Einlass (111), über den Luft eingeführt wird, und einen Auslass (112), über den Luft abgelassen wird, aufweist; und
mindestens einen Staubtrenner (300), der angeordnet ist, um Staub von der über den Einlass (111) eingeführten Luft zu trennen,
wobei ein Reinigungsglied (400) in dem mindestens einen Staubtrenner (300) bereitgestellt ist, sodass das Reinigungsglied (400) mindestens einen Abschnitt einer Innenwand des mindestens einen Staubtrenners (300) reinigt, und
der mindestens eine Staubtrenner (300) Folgendes umfasst:
einen Lufteinlass (301), über den die über den Einlass (111) eingeführte Luft in den mindestens einen Staubtrenner (300) strömt,
einen Staubauslass (302), über den von der Luft getrennter Staub abgelassen wird, und
mindestens einen Vorsprung (153), der einen Ausblasauslass (154) umfasst, über den Luft, von der Staub getrennt wird, nach außen ausgeblasen wird, und bereitgestellt ist, um in den Lufteinlass (301) eingesetzt zu werden,
wobei der Vorsprung (153) von dem Lufteinlass (301) nach unten vorspringt, und
der Lufteinlass (301) und der Staubauslass (302) angeordnet sind, um einander zugewandt zu sein.

2. Reiniger gemäß Anspruch 1, wobei das Reinigungsglied (400) rotiert, während es mindestens einen Abschnitt der Innenwand des mindestens einen Staubtrenners (300) berührt.

3. Reiniger gemäß Anspruch 1, wobei das Reinigungsglied aus einer Vielzahl von gewobenen Strähnen gebildet ist.

4. Reiniger gemäß Anspruch 1, wobei das Reinigungsglied (400) in einer Längsrichtung des mindestens einen Staubtrenners (200) auf eine Weise längsgestreckt ist, dass ein Ende des Reinigungsglieds (400) dem Staubauslass (302) zugewandt ist.

5. Reiniger gemäß Anspruch 4, wobei:
das eine Ende des Reinigungsglieds (400) durch den Staubauslass (302) durchgeht und zu einem Staubbehälter (200) hin vorspringt.

6. Reiniger gemäß Anspruch 1, wobei das Reinigungsglied (400) einen Querschnitt umfasst, der mindestens eines von einem konischen Schnitt und einem polygonalen Schnitt umfasst.

7. Reiniger gemäß Anspruch 1, wobei das Reinigungsglied (400) mit einer Masse (410) gekoppelt ist, um die Berührungsfestigkeit des Reinigungsglieds (400) in Bezug auf die Innenwand des mindestens einen Staubtrenners (300) zu erhöhen.

8. Reiniger gemäß Anspruch 1, wobei ein Hilfsreinigungsglied (420) mit dem Reinigungsglied (400) gekoppelt ist,
wobei das Hilfsreinigungsglied (420) die innere Wand des mindestens einen Staubtrenners (300) berührt und zusammen mit dem Reinigungsglied (400) rotiert, um die Innenwand des mindestens einen Staubtrenners (300) zu reinigen.

9. Reiniger gemäß Anspruch 8, wobei das Hilfsreinigungsglied (420) eine Bürste umfasst.

10. Reiniger gemäß Anspruch 1, wobei das Reinigungsglied (400) aus einem verformbaren Material gebildet ist, sodass das Reinigungsglied (400) die Innenwand des mindestens einen Staubtrenners (300) gemäß einer Rotationsbewegung davon berührt.

11. Reiniger gemäß Anspruch 10, wobei das Reinigungsglied (400) mindestens eines von Metall, Kunststoff, Silikon, Glasfaser und Gummi umfasst.

12. Reiniger gemäß Anspruch 1, wobei das Reinigungsglied (400) in der mindestens einen Staubtrenner (300) auf eine Weise bereitgestellt ist, dass ein Ende davon fixiert ist.

13. Reiniger gemäß Anspruch 1, wobei:
der Staubsammler (300) ferner eine Abdeckung (152) umfasst, die mit der mindestens einen Staubtrenner (300) auf eine Weise gekoppelt ist, dass über den Einlass (111) eingeführte Luft an den mindestens einen Staubtrenner (300) geführt wird; und
das Reinigungsglied (400) mit der Abdeckung (152) auf eine Weise gekoppelt ist, dass das Reinigungsglied (400) in dem mindestens einen Staubtrenner (300) rotiert.

14. Reiniger gemäß Anspruch 13, wobei:
die Abdeckung (152) den mindestens einen Vorsprung (153) umfasst, der eine Vorsprungsform aufweist, um in den Lufteinlass (301) eingesetzt zu werden; und
das Reinigungsglied (400) mit dem mindestens einen Vorsprung (153) auf eine Weise gekoppelt ist, dass das Reinigungsglied (400) in dem mindestens einen Staubtrenner (300) rotiert.

15. Reiniger gemäß Anspruch 1, wobei:
der Staubsammler (300) ferner eine Abdeckung (152) umfasst, die mit der mindestens einen Staubtrenner (300) auf eine Weise gekoppelt ist, dass über den Einlass (111) eingeführte Luft an den mindestens einen Staubtrenner (300) geführt wird;
jedes Reinigungsglied (400), das in dem mindestens einen Staubtrenner (300) bereitgestellt ist, mit einem Befestigungsglied (600) gekoppelt ist, das in der Abdeckung (152) angebracht ist; und
das Befestigungsglied (600) und das Reinigungsglied (400) miteinander integriert sind.

## Revendications

1. Dispositif de nettoyage (1) comportant un collecteur de poussières (100) configuré pour séparer les poussières de l'air par centrifugation, comprenant :
le collecteur de poussières (100) comportant :
un boîtier de collecte de poussières (110) présentant une entrée (111) à travers laquelle est introduit l'air et une sortie (112) à travers laquelle l'air est expulsé ; et
au moins un séparateur de poussières (300) agencé pour séparer les poussières de l'air introduit à travers l'entrée (111),
dans lequel un élément de nettoyage (400) est fourni dans l'au moins un séparateur de poussières (300) de telle sorte que l'élément de nettoyage (400) nettoie au moins une partie d'une paroi interne de l'au moins un séparateur de poussières (300), et
l'au moins un séparateur de poussières (300) comporte :
une entrée d'air (301) à travers laquelle l'air introduit à travers l'entrée (111) s'écoule à l'intérieur de l'au moins un séparateur de poussières (300),
un sortie de poussières (302) à travers laquelle les poussières séparées de l'air sont expulsées, et
au moins une protubérance (153) comportant une sortie d'échappement (154) à travers laquelle l'air duquel les poussières sont séparées est évacué vers l'extérieur et fourni pour être introduit dans l'entrée d'air (301),
dans lequel la protubérance (153) fait saillie vers le bas de l'entrée d'air (301), et
l'entrée d'air (301) et la sortie de poussières (302) sont agencées pour se faire face l'une l'autre.

2. Dispositif de nettoyage selon la revendication 1, dans lequel l'élément de nettoyage (400) tourne tout en faisant contact avec au moins une partie de la paroi interne de l'au moins un séparateur de poussières (300).

3. Dispositif de nettoyage selon la revendication 1, dans lequel l'élément de nettoyage est formé par une pluralité de brins tissés.

4. Dispositif de nettoyage selon la revendication 1, dans lequel l'élément de nettoyage (400) est allongé dans un sens longitudinal de l'au moins un séparateur de poussières (200) d'une manière à ce qu'une extrémité de l'élément de nettoyage (400) fasse face à la sortie de poussières (302).

5. Dispositif de nettoyage selon la revendication 4, dans lequel :
cette extrémité de l'élément de nettoyage (400) passe à travers la sortie de poussières (302), et fait saillie vers un récipient à poussières (200).

6. Dispositif de nettoyage selon la revendication 1, dans lequel l'élément de nettoyage (400) comporte une section en coupe comportant au moins une d'une section conique et d'une section polygonale.

7. Dispositif de nettoyage selon la revendication 1, dans lequel l'élément nettoyeur (400) est couplé à une masse (410) pour augmenter la résistance de contact de l'élément de nettoyage (400) relativement à la paroi interne de l'au moins un séparateur de poussières (300).

8. Dispositif de nettoyage selon la revendication 1, dans lequel un élément de nettoyage auxiliaire (420) est couplé à l'élément de nettoyage (400),
dans lequel l'élément de nettoyage auxiliaire (420) fait contact avec la paroi interne de l'au moins un séparateur de poussières (300), et tourne avec l'élément de nettoyage (400) pour nettoyer la paroi interne de l'au moins un séparateur de poussières (300).

9. Dispositif de nettoyage selon la revendication 8, dans lequel l'élément de nettoyage auxiliaire (420) comporte une brosse.

10. Dispositif de nettoyage selon la revendication 1, dans lequel l'élément de nettoyage (400) est formé d'un matériau déformable de telle sorte que l'élément de nettoyage (400) fasse contact avec la paroi interne de l'au moins un séparateur de poussières (300) conformément à un mouvement de rotation de celui-ci.

11. Dispositif de nettoyage selon la revendication 10, dans lequel l'élément de nettoyage (400) comporte au moins un de métal, plastique, silicium, fibre de verre et caoutchouc.

12. Dispositif de nettoyage selon la revendication 1, dans lequel l'élément de nettoyage (400) est fourni dans l'au moins un séparateur de poussières (300) d'une manière à ce qu'une extrémité de celui-ci soit fixe.

13. Dispositif de nettoyage selon la revendication 1, dans lequel :
le collecteur de poussières (300) comporte en outre un couvercle (152) couplé à l'au moins un séparateur de poussières (300) d'une manière à ce que l'air introduit à travers l'entrée (111) soit guidé vers l'au moins un séparateur de poussières (300) ; et
l'élément de nettoyage (400) est couplé au couvercle (152) d'une manière à ce que l'élément de nettoyage (400) tourne dans l'au moins un séparateur de poussières (300).

14. Dispositif de nettoyage selon la revendication 13, dans lequel :
le couvercle (152) comporte l'au moins une protubérance (153) présentant une forme de protubérance destinée à être insérée dans l'entrée d'air (301) ; et
l'élément de nettoyage (400) est couplé à l'au moins une protubérance (153) d'une manière à ce que l'élément de nettoyage (400) tourne dans l'au moins un séparateur de poussières (300).

15. Dispositif de nettoyage selon la revendication 1, dans lequel :
le collecteur de poussières (300) comporte en outre un couvercle (152) couplé à l'au moins un séparateur de poussières (300) d'une manière à ce que l'air introduit à travers l'entrée (111) soit guidé vers l'au moins un séparateur de poussières (300) ;
chaque élément de nettoyage (400) fourni dans l'au moins un séparateur de poussières (300) est couplé à un élément de fixation (600) disposé dans le couvercle (152) ; et
l'élément de fixation (600) et l'élément de nettoyage (400) sont intégrés l'un à l'autre.
